(19) Europäisches Patentamt / European Patent Office / Office européen des brevets

(11) **EP 3 533 547 B1**

(12) **EUROPEAN PATENT SPECIFICATION**

(45) Date of publication and mention
of the grant of the patent:
**15.09.2021 Bulletin 2021/37**

(21) Application number: **18854324.3**

(22) Date of filing: **17.05.2018**

(51) Int Cl.:
**B23C 5/10** (2006.01)  **B23C 5/16** (2006.01)

(86) International application number:
**PCT/CN2018/087193**

(87) International publication number:
**WO 2019/047557 (14.03.2019 Gazette 2019/11)**

(54) **MICRO-TEETH ARRANGEMENT DESIGNABLE END MILL HAVING TIP BLADE FOR DEDICATED USE WITH CARBON FIBER COMPOSITE MATERIAL**

KONSTRUIERBARER SCHAFTFRÄSER MIT MIKROZAHNANORDNUNG MIT SPITZENKLINGE ZUR ZWECKGEBUNDENEN VERWENDUNG MIT KOHLENSTOFFFASERVERBUNDSTOFFMATERIAL

FRAISE D'EXTRÉMITÉ MODULABLE À AGENCEMENT DE MICRODENTS AYANT UNE LAME D'EXTRÉMITÉ POUR UTILISATION DÉDIÉE AVEC UN MATÉRIAU COMPOSITE DE FIBRES DE CARBONE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2017 CN 201710808999**

(43) Date of publication of application:
**04.09.2019 Bulletin 2019/36**

(73) Proprietor: **Dalian University Of Technology
Dalian, Liaoning 116024 (CN)**

(72) Inventors:
• **JIA, Zhenyuan
Dalian
Liaoning 116024 (CN)**
• **WANG, Fuji
Dalian
Liaoning 116024 (CN)**
• **WANG, Zegang
Dalian
Liaoning 116024 (CN)**
• **ZHAO, Meng
Dalian
Liaoning 116024 (CN)**
• **ZHANG, Boyu
Dalian
Liaoning 116024 (CN)**
• **BAI, Yu
Dalian
Liaoning 116024 (CN)**

(74) Representative: **Hanna Moore + Curley
Garryard House
25-26 Earlsfort Terrace
Dublin 2, D02 PX51 (IE)**

(56) References cited:
EP-A1- 2 848 343       EP-A1- 3 348 340
WO-A1-2016/098092    CN-A- 103 071 840
CN-A- 103 567 524      CN-A- 106 270 700
DE-A1-102015 119 355  JP-A- 2015 120 219
KR-A- 20120 023 466    US-A1- 2007 297 864
US-A1- 2017 216 936

## Description

## Technical Field

The present invention belongs to the technical field of milling tools in machining, and relates to a design method of the end mill specialized for carbon fiber reinforced polymer/plastic (CFRP) with designable micro-tooth configuration. Two parallel V-shaped chip pockets are designed on the end cutting edge of the end mill in two cutting edge directions which are symmetrical around an end mill axis as a center. The structure may enhance chip removal performance during high-speed milling of impenetrable slots and impenetrable windows, reduce wear of the end cutting edge, conduct configuration design for micro-teeth of the peripheral cutting edge, reduce the cutting thickness of the micro-tooth cutting edges, effectively solve the problem of damage of the micro-tooth edges and finally enhance the surface quality of window bottoms and slot bottoms and the service life of the end mill.

## Background

Carbon fiber reinforced polymer/plastic (CFRP) has the performance advantages of high strength-to-weight ratio, fatigue resistance, corrosion resistance and strong bearing capacity compared with other metal materials. Therefore, the CFRP has become the preferred material for carrying equipment and weight reduction and efficiency improvement in the fields of aerospace and transportation. For CFRP members used in aerospace equipment, after laid, solidified and formed, in order to meet the requirements of assembly sizes, secondary processing is required. Especially, a large number of open impenetrable slots, open impenetrable windows and open special-shaped impenetrable holes are needed in members of engine pistons and aircraft wings. During high-speed milling processing of the impenetrable slots and the impenetrable windows, a closed space is formed; a cutting region has high temperature; removal is not smooth; and there are problems of serious wear of the end cutting edge of the end mill and easy corner chipping at an outlet and an inlet of the slots. The worn end cutting edge influences processing surface roughness, resulting in difficulty to ensure the quality of the processing surface of the slot bottom. Furthermore, the CFRP belongs to typical materials difficult to machine, wherein reinforced fibers and resin matrix have different linear expansion coefficients. The reinforced fibers are extremely easy to generate brittle fracture. The cutting edge continuously bears the loads of the matrix and the fibers. The loads are centralized on a small area near a cutting contact point. Especially during milling processing, instantaneous cutting thickness is varied, causing that the cutting force borne by the cutting edge fluctuates. If the strength of the cutting edge is insufficient, the cutting edge will be damaged, which will lead to poor processing surface quality and low tool life. Especially, for the end mill with micro-tooth structure of peripheral cutting edge, micro-teeth are staggered in a certain rule. Micro-tooth configuration can determine overlaps of two adjacent micro-teeth. If the middle parts of adjacent micro-teeth are overlapped, and the edge parts of the micro-teeth are not overlapped, the cutting thickness of the edge part of the micro-teeth is larger than the cutting thickness of the middle parts of the micro-teeth, resulting in a large cutting force on the edge part. At the same time, because the cutting edge is sharp and low in strength, the edge part is more prone to damage. On the contrary, if the cutting edges are overlapped and the middle parts of the micro-teeth are not overlapped, the cutting thickness of the micro-tooth edge can be reduced, thereby effectively protecting the edge of micro-tooth. Therefore, in order to ensure long-term excellent cutting performance of the end cutting edge and the peripheral cutting edge in a complex cutting environment and to ensure the processing quality of the bottom surfaces and the side surfaces when milling the impenetrable windows and the impenetrable slots, it is of great significance to consider chip removal and heat dissipation performance of the end cutting edge and the micro-tooth configuration of the peripheral cutting edge for improving the quality of the processing surface and the life of the micro-tooth end mill.

A "carbide fish-scale type milling cutter" with patent application number of 200910013142.0 invented by Tang Chensheng et al. relates to a milling cutter for milling processing of composite materials such as carbon fibers and glass fibers. A left-hand flute and a right-hand flute are symmetrically staggered to form a cutting unit. The number of the cutting edges is increased to 24, which is equivalent, to a certain degree, to that the milling cutters with double edges and four edges improve cutting efficiency and processing quality and reduce the milling force. At the same time, in order to increase the cutting depth of micro-tooth cutting and increase the processing efficiency, a "multi-blade and micro-tooth milling cutter for high-speed milling of carbon fiber reinforced polymer/plastic (CFRP)" with a patent application number of 201610806761.5 invented by Wang Fuji et al. of Dalian University of Technology enhances the strength of a single micro-tooth by the design of a negative rake angle and a large minor cutting edge angle with the aid of the increase of the length of micro-tooth cutting edge. However, the traditional milling cutters mentioned in the above patents only have chip pockets between cutting edges in the end cutting edge, and are not designed with chip pockets at the end cutting edge axis. In the process of milling the structures of the impenetrable windows, the impenetrable slots and special-shaped impenetrable holes, the chips at the end cutting edge axis of the milling cutter are difficult to be removed due to small centrifugal force, and are extremely easy to concentrate on the end cutting edge axis and constantly wear the cutting edges, resulting in difficulty to ensure the processing quality of the bottom surface due to fast wear of the cutting edges. Therefore, the traditional milling cutters have certain limitations in the practical application of impenetrable slot and impenetrable window milling. Furthermore, the design of the micro-tooth milling cutters in the above invention patents does not consider the influence of micro-tooth configuration on damage of the cutting edges. If micro-tooth configuration is unreasonable, the micro-tooth edges will be easy to damage, thereby reducing the processing quality and the cutter life.

PCT publication number WO 2016/098092 A1 shows a design method for an end mill specialized for carbon fiber reinforced polymer/plastic with designable micro-tooth configuration, wherin the CFRP-specialized end mill comprises an end cutting edge region, a first peripheral cutting edge region, a second peripheral cutting edge region with constant inverse helical groove and a shank; wherein the end cutting edge region is designed with a rake face of end cutting edge, a flank face of end cutting edge, and a secondary flank face of end cutting edge, and also has a chip pocket of end cutting edge; parallel V-shaped chip pockets are designed on the end cutting edge region in two cutting edge directions which are symmetrical around an end mill axis as a center, and the V-shaped chip pocket presents such a structural shape that a bottom is narrow and a top is wide; to ensure that the V-shaped chip pocket has good chip removal performance and is closely connected with the chip pocket of end cutting edge, the sizes of a design structure of the V-shaped chip pocket are determined: the bottom width is L1, the top width of V-shaped chip pocket is L2, the depth of the V-shaped chip pocket is L3; the first peripheral cutting edge region is of an asymmetric-and spiral-stagger structure , and m right-hand flutes and n left-hand flutes are staggered to form a plurality of equidimensional micro-teeth.

## Summary

The present invention relates to a design method of the end mill specialized for carbon fiber reinforced polymer/plastic (CFRP) with designable micro-tooth configuration. Two parallel V-shaped chip pockets are designed on an end cutting edge of the end mill in two cutting edge directions which are symmetrical around an end mill axis as a center so as to solve the problem of chip aggregation caused by small centrifugal force at the end cutting edge axis of the traditional end mill when milling impenetrable slots and impenetrable windows; and special micro-tooth configuration design is considered for the peripheral cutting edge of the end mill so as to solve the problems of poor chip removal and heat dissipation at the end cutting edge, serious wear and corner chipping at the weak edge of the peripheral cutting edge of the micro-teeth when milling impenetrable slots and impenetrable windows at high speed by the CFRP, thereby enhancing the service life and the cutting performance of the end mill.

The technical solution of the present invention has the features of claim 1.

To solve the problems of difficult chip removal and rapid wear of the end cutting edge, two parallel V-shaped chip pockets are designed on the end cutting edge of the end mill in two cutting edge directions which are symmetrical around an end mill axis as a center. The V-shaped chip pocket is connected and communicated with the chip pocket of the end cutting edge, so that the chips at the end cutting edge axis can be quickly and effectively removed when milling impenetrable slots and impenetrable windows at high speed and friction heat between the end cutting edge and the material is quickly radiated, to achieve the purpose of reducing wear of the end cutting edge.

The end mill specialized for carbon fiber reinforced polymer/plastic (CFRP) with designable micro-tooth configuration comprises an end cutting edge I, a first peripheral cutting edge region II with variable inverse helical groove, a second peripheral cutting edge region III with constant inverse helical groove and a shank IV, wherein the end cutting edge I is designed with a rake face 2 of end cutting edge, a flank face 3 of end cutting edge, and a secondary flank face 4 of end cutting edge, and also has a chip pocket 5 of end cutting edge; and a primary cutting edge has a rake angle of 0°, a primary relief angle $\alpha_{f1}$ of 7° and a secondary relief angle $\alpha_{f2}$ of 14°.

Parallel V-shaped chip pockets 1 are designed on the end cutting edge I in two cutting edge directions which are symmetrical around an end mill axis as a center, and the V-shaped chip pocket 1 presents such a structural shape that a bottom is narrow and a top is wide, which is beneficial for quickly removing the chips of powdery CFRP. To ensure that the chip pocket of the end cutting edge has good chip removal performance and is closely connected with the chip pocket of the end cutting edge, the sizes of a design structure of the V-shaped chip pocket 1 are determined: the bottom width is L1, the top width of the V-shaped chip pocket is L2, the depth of the V-shaped chip pocket is L3 and tilt angles of two side surfaces of the V-shaped chip pocket 1 satisfy $\delta_1 = \delta_2$.

The first peripheral cutting edge region II with variable inverse helical groove is of an asymmetric-and spiral-stagger structure, and m right-hand flutes 7 and n left-hand flutes 8 are staggered to form a plurality of equidimensional micro-teeth 6; to reduce the vibration of the end cutting edge I and a transition part of peripheral cutting edge region during slot milling, a section of the first peripheral cutting edge region II with variable left-hand inverse 8 helical flute angle is designed near the end cutting edge I; the peripheral cutting edge points to the end cutting edge direction and the change relationship of the helical angle of the left-hand flutes 8 is $\gamma_1 < \gamma_2 < \gamma_3$.

In view of the problem of corner chipping at the weak edge of micro-teeth, a design method for the micro-tooth configuration of the peripheral cutting edge of the end mill is invented. By determining the key structural parameters of the end mill and the geometrical relationship of the end mill structure, it is known from calculation that the micro-tooth edges are overlapped in forward and backward directions. The overlapping configuration mode of two micro-tooth edges can effectively reduce cutting thickness at the edges, thereby avoiding the phenomenon of easy corner chipping at the weak edges and realizing high-speed, steady and effective processing of the CFRP under large cutting amount. A three-dimensional stereographic end mill is sectioned along an axial direction and then is unfolded; the second peripheral cutting edge region III with constant inverse helical groove that represents the configuration mode is selected to form a two-dimensional schematic diagram of micro-tooth configuration of the end mill by using a tangential direction and an axial direction to form a coordinate system; the right-hand flutes 7 and the left-hand flutes 8 are staggered to form micro-teeth 6; the micro-teeth 6 comprise a lower cutting edge 9 and an upper cutting edge 10; in the design process of the end mill, tool geometric parameters are known, i.e., length A of the micro-tooth 6, width B of the left-hand flute 8, helical angle $\theta$ of the right-hand flute 7, number $Z_1$ of milling blade and end mill diameter D; the configuration mode of the micro-teeth 6 is mainly determined by the following variables: tangential length d of the left-hand flute 8, tangential length c between adjacent micro-teeth 6, helical angle $\beta$ of the left-hand flute 8, tangential length f of micro-tooth 6, and number $Z_2$ of the left-hand flute 8; specific steps of the design method are as follows:

step 1: calculating the tangential length c between adjacent micro-teeth 6 through the end mill diameter D and the number $Z_1$ of milling blade;

$$c = \frac{\pi \times D}{Z_1}$$

step 2: selecting the tangential length d of the left-hand flute 8 as an independent variable parameter; establishing a triangle using the width B of the left-hand flute 8and the tangential length d of the left-hand flute 8 as sides; and calculating the helical angle $\beta$ of the left-hand flute 8 through the geometrical relationship of the triangle;

$$\frac{\sin(\theta + \beta)}{d} = \frac{\cos \beta}{B}$$

similarly, establishing a triangle by using the length A of the micro-tooth 6 and the tangential length f of the micro-tooth 6 as side lengths; and calculating the tangential length f of the micro-tooth and the number $Z_2$ of left-hand flute through the geometrical relationship of the triangle;

$$\frac{\sin(\theta + \beta)}{f} = \frac{\cos \beta}{A}$$

$$f = (\pi \times D \div Z_2) - d$$

step 3: judging whether the relationship d<c<f is satisfied; if so, covering the lower cutting edge 9 and the upper cutting edge 10 of each micro-tooth 6 by the cutting edge of a previous micro-tooth 6 so that two edges of each micro-tooth 6 are overlapped; if not, returning to step 2 to reselect the tangential length d of inverse flute.

The present invention has beneficial effects that through which an end mill specialized for carbon fiber reinforced polymer/plastic (CFRP) with designable micro-tooth configuration can be fabricated. Two parallel V-shaped chip pockets are designed on the end cutting edge of the end mill in two cutting edge directions which are symmetrical around an end mill axis as a center. The chips and the heat at the end cutting edge axis can be rapidly removed in time during slot milling or impenetrable window milling, so as to avoid serious wear of the end cutting edge under the mixing effect of the chips and the heat and reduce the replacement time of the end mill, thereby enhancing surface processing quality and processing efficiency of the bottom of the chip pocket. When milling impenetrable windows and impenetrable slots of the CFRP, the overlapped configuration mode of two micro-tooth edges ensures that the previous micro-tooth always completes partial removal of the material before the material is removed from the micro-tooth edges. Therefore, this configuration mode can reduce the cutting thickness of the two micro-tooth edges, thereby reducing fracture of weak cutting edge and ensuring excellent cutting performance of the micro-teeth under a long cutting stroke and thus enhancing surface processing quality of side walls of the impenetrable slots and the impenetrable windows. The variation helical angle inverse flute chip with transition part from the peripheral cutting edge region to the end cutting edge is adopted, which is a passive method to suppress vibration by means of disturbance regenerative chatter effect, which can effectively suppress chatter in high efficiency milling processing. High-quality and high-efficiency processing requirements for CFRP members with different fiber grades, different thicknesses and multiple lamination modes are satisfied.

## Description of Drawings

Fig. 1 is a structural schematic diagram of the CFRP-specialized end mill.
Fig. 2 is a left view of the CFRP-specialized end mill.

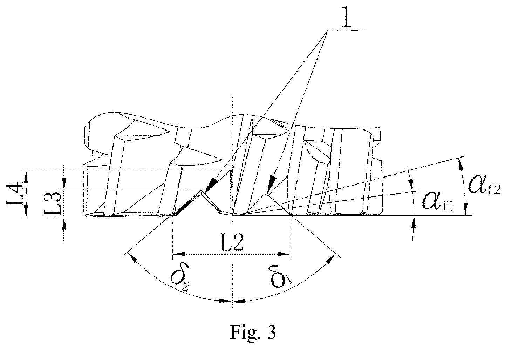

Fig. 3 is an enlarged view of an end cutting edge in Fig. 1.

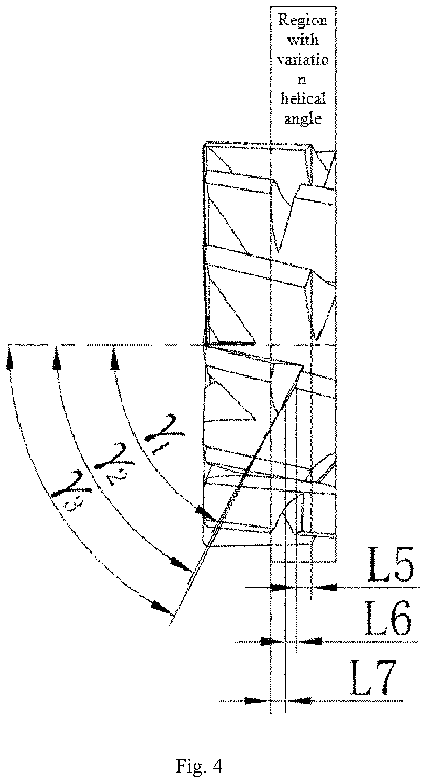

Fig. 4 is a peripheral cutting edge region with variable inverse helical groove.
Fig. 5 is a flow chart of calculation of overlapped configuration mode of two micro-tooth edges.
Fig. 6 is an expanded view of overlapped configuration mode of two micro-tooth edges.
Fig. 7(a) is a three-dimensional end mill of an embodiment 1.
Fig. 7(b) is a three-dimensional end mill of an embodiment 2.
Fig. 8(a) is wear of a micro-tooth of overlapped configuration mode of two micro-tooth edges.
Fig. 8(b) is wear of a micro-tooth without considering micro-tooth configuration mode.

In the figures: I end cutting edge; II first peripheral cutting edge region with variable inverse helical groove; III second peripheral cutting edge region with constant inverse helical groove; IV shank; 1V-shaped chip pocket; 2 rake face of end cutting edge; 3 flank face of end cutting edge; 4 secondary flank face of end cutting edge; 5 chip pocket of end cutting edge; 6 micro-tooth; 7 right-hand flute; 8 left-hand flute; 9 lower cutting edge; 10 upper cutting edge; L1 bottom width of V-shaped chip pocket; L2 top width of V-shaped chip pocket; L3 depth of V-type chip pocket; L4 depth of chip pocket of end cutting edge; L5 length of peripheral cutting edge region when inverse helical flute angle is $\gamma_1$; L6 length of peripheral cutting edge region when inverse helical flute angle is $\gamma_2$; L7 length of peripheral cutting edge region when inverse helical flute angle is $\gamma_3$; $\gamma_1$, $\gamma_2$ and $\gamma_3$ variable helical angles of variable left-hand inverse flute; $\alpha_{f1}$ primary relief angle of end cutting edge; $\alpha_{f2}$ secondary relief angle of end cutting edge; $\delta_1$ left-side tilt angle of V-type chip pocket; $\delta_2$ right-side tilt angle of V-type chip pocket; A length of micro-tooth; B width of left-hand flute; $\theta$ helical angle of right-hand flute; $Z_1$ number of milling blade; D end mill diameter; d tangential length of inverse flute; c tangential length between adjacent micro-teeth; $\beta$ helical angle of left-hand flute; f tangential length of micro-tooth; and $Z_2$ number of flutes.

## Detailed Description

Specific embodiments of the present invention are further described below in combination with accompanying drawings and the technical solution.

## Optimal Embodiments

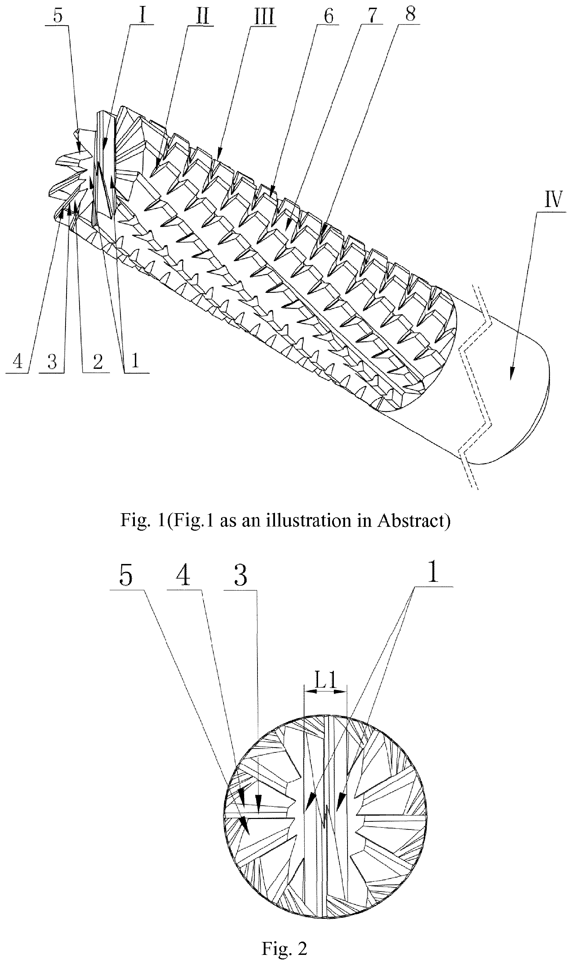

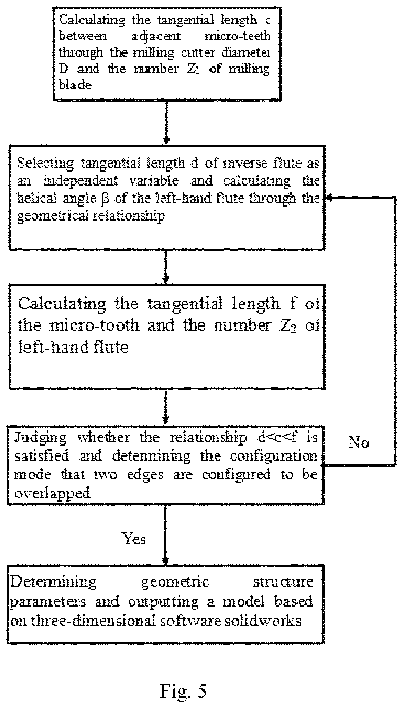

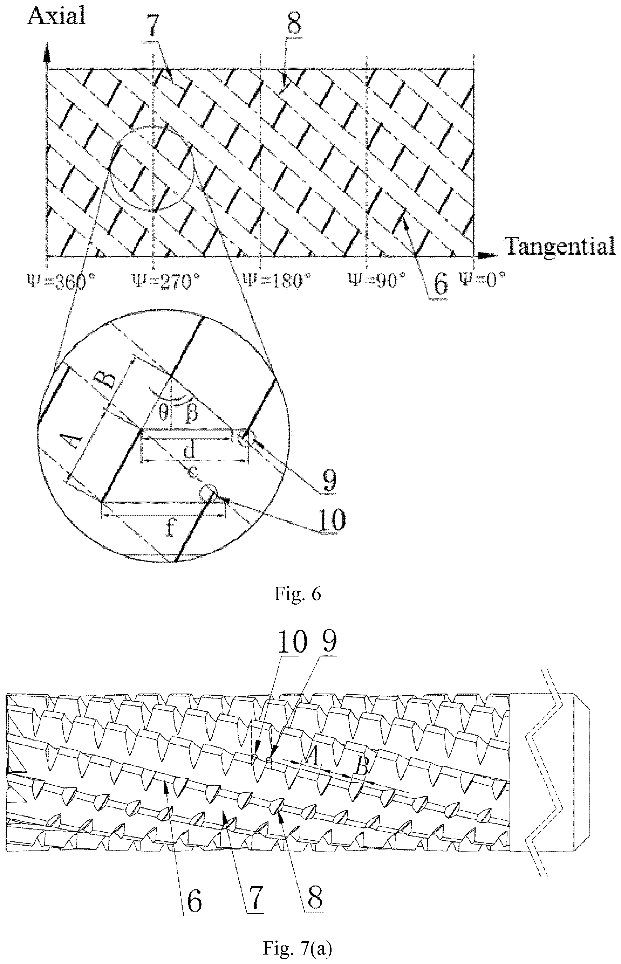

Fig. 2 is a structural schematic diagram of a V-shaped chip pocket protected in claim 1 of the present invention. Fig. 5 and Fig. 6 are design methods for micro-tooth configuration of the peripheral cutting edge region of the end mill protected in claim 1 of the present invention. It can be seen from the drawings that the structure of the V-shaped chip pocket can smoothly remove the chips and the cutting heat from the bottom, so as to prevent the chips from being accumulated between the cutting edge and a processing surface and prevent serious wear of the end cutting edge. The design method for micro-tooth configuration ensures that the two micro-tooth edges are configured to be overlapped. This mode can effectively avoid the problem of corner chipping at the micro-tooth edges caused by large cutting thickness. The micro-teeth after corner chipping cannot effectively cut fibers and thus causes that the quality of the processing surface will not meet the requirements. Detailed description of the present invention is described below in detail in combination with accompanying drawings and the technical solution.

The end cutting edge attached cutter for high-speed CFRP milling in the present embodiment is shown in Fig. 1. The CFRP-specialized end mill comprises an end cutting edge I, a first peripheral cutting edge region II with variable inverse helical groove, a second peripheral cutting edge region III with constant inverse helical groove and a shank IV.

Two parallel V-shaped chip pockets 1 are designed on the end cutting edge I of the CFRP-specialized end mill in two cutting edge directions which are symmetrical around an end mill axis as a center. The bottom width of the V-shaped chip pocket 1 is L1=2.1 mm; the top width of the V-shaped chip pocket is L2=3.8 mm; the depth of the V-shaped chip pocket is L3=1.5 mm and tilt angles of two side surfaces of the V-shaped chip pocket 1 satisfy $\delta_1=\delta_2=50°$; a primary relief angle $\alpha_{f1}$ of the end cutting edge is 7°; and a secondary relief angle $\alpha_{f2}$ of the end cutting edge is 14°. The first peripheral cutting edge region II with variable inverse helical groove is of an asymmetric-and spiral-stagger structure. A section of peripheral cutting edge region with variable helical angle is designed near the end cutting edge. The peripheral cutting edge points to the end cutting edge direction. When the helical angle of the left-hand flute 8 is $\gamma_1$=66.7°, a corresponding length of the peripheral cutting edge region is L5=0.5 mm; when the helical angle of the flute 8 is $\gamma_2$=67.5°, a corresponding length of the peripheral cutting edge region is L6=0.4 mm and when the helical angle of the flute 8 is $\gamma_3$=75.7°, a corresponding length of the peripheral cutting edge region is L7=0.5 mm.

In the design of the end mill, considering reduction of burrs and axial force, basic tool geometric parameters are determined as follows: helical angle $\theta$ of the right-hand flute is 15°, length A of the micro-tooth 6 is 1.3 mm, width B of the flute is 0.8 mm, number $Z_1$ of milling blade is 12 and end mill diameter D is 10 mm; tangential lengths of inverse flute are respectively selected as follows: $d_1$=2mm and $d_2$=2.3mm; tangential length c between adjacent micro-teeth, helical angle $\beta$ of the left-hand flute, tangential length f of micro-tooth and number $Z_1$ of the flute are determined; and several different configuration modes are analyzed. Specific steps of the design method are as follows:

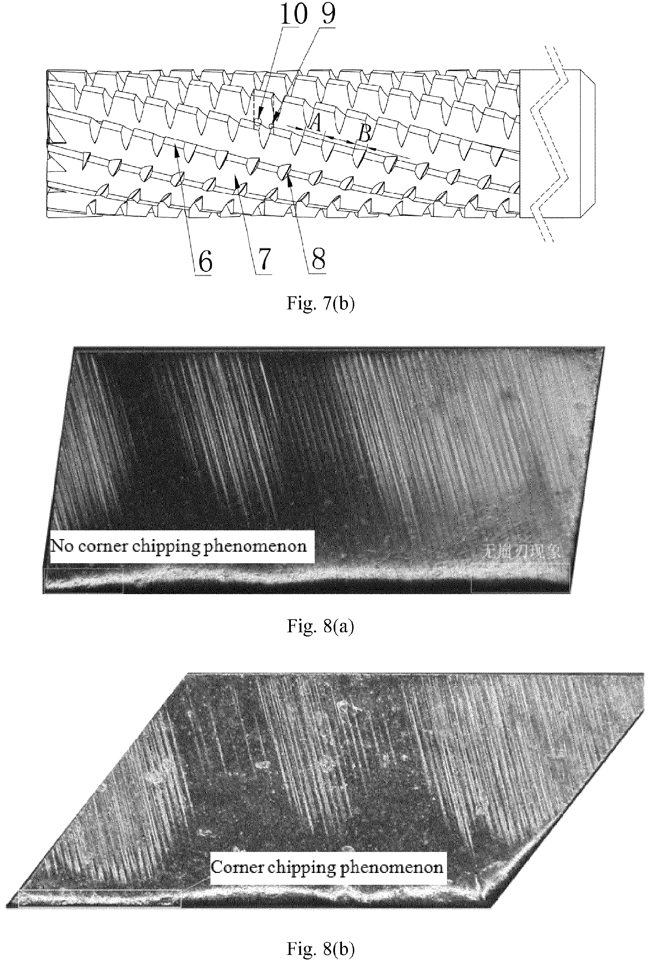

> step 1: calculating the tangential length c between adjacent micro-teeth as 2.618 mm through the end mill diameter D and the number $Z_1$ of milling blade in accordance with formula (1);
> step 2: respectively selecting tangential lengths of inverse flute as follows: $d_1$=2mm and $d_2$=2.3mm; and in accordance with formulas (2), (3) and (4), respectively calculating $\beta_1$=66.7°, $\beta_2$=69.7°, $f_1$=3.25mm, $f_2$=3.7375mm, $Z_{21}$=6 and $Z_{22}$=5; and
> step 3: analyzing the micro-tooth configuration mode under different values of the tangential length d of inverse flute through the geometric parameters calculated in step 1 and step 2:
> At this moment, $d_1$<c<$f_1$ and $d_2$<c<$f_2$ are satisfied. Such configuration mode that the upper cutting edge and the lower cutting edge of the micro-tooth are overlapped. Based on three-dimensional mapping software SolidWorks, two end mills can be designed, as shown in Figs. 7(a) and (b), and each micro-tooth has a lower edge overlap 4 and an upper edge overlap 5.

To verify the application effect of the CFRP-specialized end mill which considers micro-tooth configuration design, when spindle speed is 6000rpm and feed rate is 800mm/min, the CFRP with a thickness of 8mm is subjected to an impenetrable slot milling experiment. The experiment finds: in the milling process, there is no phenomenon of corner chipping at the micro-tooth edges of the peripheral cutting edge region of the end mill which considers micro-tooth configuration design, as shown in Fig. 8(a); there is a phenomenon of corner chipping at the micro-tooth edges of the peripheral cutting edge region of the end mill which does not consider micro-tooth configuration design, as shown in Fig. 8(b).

### Industrial Applicability

The CFRP-specialized end mill with designable micro-tooth configuration designed through the method presented in the invention is especially suitable for milling processing of impenetrable slots, impenetrable windows and special-shaped impenetrable hole structures in CFRP members. The parallel V-shaped chip pockets are designed on the end cutting edge of the end mill in two cutting edge directions which are symmetrical around an end mill axis as a center, so as to effectively enhance the chip removal and heat radiation performance of the end mill, reduce the wear of the chips to the end cutting edge and ensure the processing quality of bottom surfaces of the impenetrable windows and the impenetrable slots. The peripheral cutting edge region with variation inverse helical groove in the end mill can reduce cutting tool vibration during milling processing. Considering reasonable micro-tooth configuration of the peripheral cutting edge of the end mill may avoid the problem of corner chipping on two micro-tooth edges caused by large cutting thickness, thereby effectively protecting the edges with poor micro-tooth strength and ensuring that the micro-teeth of the peripheral cutting edge of the end mill have long-term excellent cutting performance. Therefore, the end mill designed through the present invention is intended to enhance the service life of the end mill with respect to the milling processing of the CFRP, and its industrial application not only can reduce tool change time and increase processing efficiency, but also can reduce the use cost and finally enhance economic benefits of enterprises.

### Claims

1. A design method of the end mill specialized for carbon fiber reinforced polymer/plastic with designable micro-tooth configuration, the CFRP-specialized end mill comprises an end cutting edge (I), a peripheral cutting edge region (II) with variation inverse helical groove, a peripheral cutting edge region (III) with constant inverse helical groove and a shank (IV);
wherein the end cutting edge (I) is designed with a rake face (2) of end cutting edge, a flank face (3) of end cutting edge, and a secondary flank face (4) of end cutting edge, and also has a chip pocket (5) of end cutting edge; parallel V-shaped chip pockets (1) are designed on the end cutting edge (I) in two cutting edge directions which are symmetrical around an end mill axis as a center, and the V-shaped chip pocket (1) presents such a structural shape that a bottom is narrow and a top is wide; to ensure that the V-shaped chip pocket (1) has good chip removal performance and is closely connected with the chip pocket (5) of end cutting edge, the sizes of a design structure of the V-shaped chip pocket (1) are determined: the bottom width is L1, the top width of V-shaped chip pocket is L2, the depth of the V-shaped chip pocket is L3 and tilt angles of two side surfaces of the V-shaped chip pocket (1) satisfy $\delta_1=\delta_2$;

the peripheral cutting edge region (II) with variation inverse helical groove is of an asymmetric-and spiral-stagger structure, and m right-hand flutes (7) and n left-hand flutes (8) are staggered to form a plurality of equidimensional micro-teeth (6); to reduce the vibration of the end cutting edge (I) and a transition part of peripheral cutting edge region during slot milling, a section of peripheral cutting edge region (II) with variation left-hand inverse helical flute angle is designed near the end cutting edge (I); the peripheral cutting edge region (II) with variation left-hand inverse helical flute angle points to the end cutting edge direction and the change relationship of the helical angle of the left-hand flutes (8) is $\gamma_1<\gamma_2<\gamma_3$; when the helical angle of the left-hand flute (8) is $\gamma_1$=66.7°, a corresponding length of the peripheral cutting edge region is L5=0.5 mm; when the helical angle of the left hand flute (8) is $\gamma_2$=67.5°, a corresponding length of the peripheral cutting edge region is L6=0.4 mm; and when the helical angle of the left hand flute (8) is $\gamma_3$=75.7°, a corresponding length of the peripheral cutting edge region is L7=0.5 mm;

a three-dimensional stereographic end mill is sectioned along an axial direction and then is unfolded; the peripheral cutting edge region (III) with constant inverse helical groove that represents the configuration mode is selected to form a two-dimensional schematic diagram of micro-tooth configuration of the end mill by using a tangential direction and an axial direction to form a coordinate system; the right-hand flutes (7) and the left-hand flutes (8) are staggered to form micro-teeth (6); the micro-teeth (6) comprise a lower cutting edge (9) and an upper cutting edge (10); in the design process of the end mill, tool geometric parameters are known, i.e., length A of the micro-tooth (6), width B of the left-hand flute (8), helical angle $\theta$ of the right-hand flute (7), number of milling blade $Z_1$ and end mill diameter D; the configuration mode of the micro-teeth (6) is mainly determined by the following variables: tangential length d of the left-hand flute (8), tangential length c between adjacent micro-teeth (6), helical angle $\beta$ of the left-hand flute (8), tangential length f of micro-tooth (6), and number $Z_2$ of the left-hand flute (8); specific steps of the design method are as follows:

wherein step 1: calculating the tangential length c between adjacent micro-teeth (6) through the end mill diameter D and the number $Z_1$ of milling blade;

$$c = \frac{\pi \times D}{Z_1} \qquad\qquad (1)$$

step 2: selecting the tangential length d of the left-hand flute (8) as an independent variable parameter; establishing a triangle using the width B of the left-hand flute (8) and the tangential length d of the left-hand flute (8) as sides; and calculating the helical angle $\beta$ of the left-hand flute (8) through the geometrical relationship of the triangle;

$$\frac{\sin(\theta+\beta)}{d} = \frac{\cos\beta}{B} \qquad\qquad (2)$$

similarly, establishing a triangle by using the length A of the micro-tooth (6) and the tangential length f of the micro-tooth (6) as side lengths; and calculating the tangential length f of the micro-tooth and the number $Z_2$ of left-hand flute through the geometrical relationship of the triangle;

$$\frac{\sin(\theta+\beta)}{f} = \frac{\cos\beta}{A} \qquad\qquad (3)$$

$$f = (\pi \times D \div Z_2) - d \qquad\qquad (4)$$

step 3: judging whether the relationship d<c<f is satisfied; if so, covering the lower cutting edge (9) and the upper cutting edge (10) of each micro-tooth (6) by the cutting edge of a previous micro-tooth (6) so that two edges of each micro-tooth (6) are overlapped; if not, returning to step 2 to reselect the tangential length d of inverse flute.

**Patentansprüche**

1. Gestaltungsmethode des Schaftfräsers, der auf kohlenstofffaserverstärktes/kohlenstofffaserverstärkten Polymer/Kunststoff spezialisiert ist, mit gestaltbarer Mikrozahnkonfiguration, wobei der auf CFRP spezialisierte Schaftfräser eine Endschneidkante (I), einen Umfangsschneidkantenbereich (II) mit inverser Variationsschraubennut, einen peripheren Schneidkantenbereich (III) mit inverser konstanter Schraubennut und einen Schaft (IV) umfasst; wobei die Endschneidkante (I) mit einer Spanfläche (2) der Endschneidkante, einer Flankenfläche (3) der Endschneidkante und einer sekundären Flankenfläche (4) der Endschneidkante gestaltet ist und ebenso eine Spantasche (5) der Endschneidkante aufweist; parallele V-förmige Spantaschen (1) an der Endschneidkante (I) in zwei Schneidkantenrichtungen gestaltet sind, die um eine Schaftfräserachse als ein Zentrum symmetrisch ausgebildet sind, und die V-förmige Spantasche (1) eine solche Strukturform vorweist, dass ein Unterteil schmal und ein Oberteil breit ist; um sicherzustellen, dass die V-förmige Spantasche (1) eine gute Spanabnahmeleistung aufweist und mit der Spantasche (5) der Endschneidkante eng verbunden ist, die Größen einer Gestaltungsstruktur der V-förmigen Spantasche (1) bestimmt sind: die untere Breite ist L1, die obere Breite der V-förmigen Spantasche ist L2, die Tiefe der V-förmigen Spantasche ist L3 und Neigungswinkel von zwei Seitenoberflächen der V-förmigen Spantasche (1) erfüllen $\delta_1 = \delta_2$;

   wobei der Umfangsschneidkantenbereich (II) mit inverser Variationsschraubennut eine asymmetrisch und spiralförmig gestaffelte Struktur aufweist und m rechte Spannuten (7) und n linke Spannuten (8) gestaffelt sind, um mehrere dimensionsgleiche Mikrozähne (6) auszubilden; um die Schwingung der Endschneidkante (I) und eines Übergangsteils des Umfangsschneidkantenbereichs während einem Nutenfräsen zu reduzieren, ein Abschnitt des Umfangsschneidkantenbereichs (II) mit Variationsschraubenwinkel der linken inversen Spannute nahe der Endschneidkante (I) gestaltet ist; der Umfangsschneidkantenbereich (II) mit Variationsschraubenwinkel der linken inversen Spannute zu der Endschneidkantenrichtung zeigt und das Änderungsverhältnis des Schraubenwinkels der linken Spannuten (8) $\gamma_1 < \gamma_2 < \gamma_3$ ist; wenn der Schraubenwinkel der linken Spannut (8) $y_1 = 66{,}7°$ beträgt, eine entsprechende Länge des Umfangsschneidkantenbereichs L5=0,5 mm beträgt; wenn der Schraubenwinkel der linken Spannut (8) $y_2 = 67{,}5°$ beträgt, eine entsprechende Länge des Umfangsschneidkantenbereichs L6=0,4 mm beträgt; und wenn der Schraubenwinkel der linken Spannut (8) $y_3 = 75{,}7°$ beträgt, eine entsprechende Länge des Umfangsschneidkantenbereichs L7=0,5 mm beträgt;

   wobei ein dreidimensionaler stereographischer Schaftfräser entlang einer Achsenrichtung in Abschnitte unterteilt und dann aufgeklappt wird; der Umfangsschneidkantenbereich (III) mit inverser konstanter Schraubennut, die den Konfigurationsmodus darstellt, ausgewählt wird, um ein zweidimensionales schematisches Diagramm einer Mikrozahnkonfiguration des Schaftfräsers durch Verwenden einer Tangentialrichtung und einer Achsenrichtung auszubilden, um ein Koordinatensystem auszubilden; die rechten Spannuten (7) und die linken Spannuten (8) gestaffelt sind, um Mikrozähne (6) auszubilden; die Mikrozähne (6) eine untere Schneidkante (9) und eine obere Schneidkante (10) umfassen; in dem Gestaltungsvorgang des Schaftfräsers geometrische Parameter eines Werkzeugs bekannt sind, d. h. Länge A des Mikrozahns (6), Breite B der linken Spannut (8), Schraubenwinkel 0 der rechten Spannut (7), Nummer eines Fräsblatts $Z_1$ und Schaftfräserdurchmesser D; der Konfigurationsmodus der Mikrozähne (6) hauptsächlich durch folgende Variablen bestimmt wird: Tangentiallänge d der linken Spannut (8), Tangentiallänge c zwischen angrenzenden Mikrozähnen (6), Schraubenwinkel $\beta$ der linken Spannut (8), Tangentiallänge f des Mikrozahns (6) und Nummer $Z_2$ der linken Spannut (8); die spezifischen Schritte des Gestaltungsverfahrens wie folgt sind:

   wobei Schritt 1: Berechnen der Tangentiallänge c zwischen angrenzenden Mikrozähnen (6) durch den Schaftfräserdurchmesser D und die Nummer $Z_1$ des Fräsblatts;

$$c = \frac{\pi \times D}{Z_1} \qquad\qquad (1)$$

   Schritt 2: Auswählen der Tangentiallänge d der linken Spannut (8) als einen unabhängigen variablen Parameter; Herstellen eines Dreiecks unter Verwendung der Breite B der linken Spannut (8) und der Tangentiallänge d der linken Spannut (8) als Seiten; und Berechnen des Schraubenwinkels $\beta$ der linken Spannut (8) durch die geometrische Beziehung des Dreiecks;

$$\frac{\sin(\theta+\beta)}{d} = \frac{\cos\beta}{B} \qquad (2)$$

gleichermaßen, Herstellen eines Dreiecks durch Verwenden der Länge A des Mikrozahns (6) und der Tangentiallänge f des Mikrozahns (6) als Seitenlängen; und Berechnen der Tangentiallänge f des Mikrozahns und der Nummer $Z_2$ der linken Spannut durch die geometrische Beziehung des Dreiecks;

$$\frac{\sin(\theta+\beta)}{f} = \frac{\cos\beta}{A} \qquad (3)$$

$$f = (\pi \times D \div Z_2) - d \qquad (4)$$

Schritt 3: Beurteilen, ob die Beziehung d<c<f erfüllt ist; wenn ja, Abdecken der unteren Schneidkante (9) und der oberen Schneidkante (10) jedes Mikrozahns (6) durch die Schneidkante eines vorherigen Mikrozahns (6), so dass zwei Kanten jedes Mikrozahns (6) überlappen; wenn nicht, Zurückkehren zu Schritt 2, um die Tangentiallänge d der inversen Spannut neu auszuwählen.

## Revendications

1. Procédé de conception de la fraise en bout spécialisée pour le polymère/plastique renforcé de fibres de carbone avec une configuration de micro-dents pouvant être conçue, la fraise en bout spécialisée pour le CFRP comprend un bord de coupe d'extrémité (I), une région de bord de coupe périphérique (II) avec une rainure hélicoïdale inversée variable, une région de bord de coupe périphérique (III) avec une rainure hélicoïdale inversée constante et une tige (IV);
le bord de coupe d'extrémité (I) étant conçu avec une face d'attaque (2) de bord de coupe d'extrémité, une face de flanc (3) de bord de coupe d'extrémité et une face de flanc secondaire (4) de bord de coupe d'extrémité, et a également une poche à copeaux (5) de bord de coupe d'extrémité ; des poches à copeaux parallèles en forme de V (1) sont conçues sur le bord de coupe d'extrémité (I) dans deux directions de bord de coupe qui sont symétriques autour d'un axe de fraise en bout en tant que centre, et la poche à copeaux en forme de V (1) présente une forme structurelle telle que le fond est étroit et le sommet est large ; pour garantir que la poche à copeaux en forme de V (1) a une bonne efficacité d'évacuation des copeaux et qu'elle est étroitement reliée à la poche à copeaux (5) de bord de coupe d'extrémité, les dimensions d'une structure de conception de la poche à copeaux en forme de V (1) sont déterminées : la largeur de fond est L1, la largeur de sommet de la poche à copeaux en forme de V est L2, la profondeur de la poche à copeaux en forme de V est L3 et les angles d'inclinaison de deux surfaces latérales de la poche à copeaux en forme de V (1) satisfont $\delta_1 = \delta_2$;
la région de bord de coupe périphérique (II) avec une rainure hélicoïdale inversée variable est une structure asymétrique et en quinconce, et m cannelures droites (7) et n cannelures gauches (8) sont disposées en quinconce pour former une pluralité de micro-dents (6) équidimensionnelles ; pour réduire les vibrations du bord de coupe d'extrémité (I) et d'une partie de transition de la région de bord de coupe périphérique pendant le fraisage de rainures, une section de la région de bord de coupe périphérique (II) avec un angle de cannelure hélicoïdal inversé à gauche variable est conçue à proximité du bord de coupe d'extrémité (I) ; la région de bord de coupe périphérique (II) avec un angle de cannelure hélicoïdal inversé à gauche variable est dirigée vers la direction de bord de coupe d'extrémité et la relation de changement de l'angle hélicoïdal des cannelures gauches (8) est $\gamma_1 < \gamma_2 < \gamma_3$ ; lorsque l'angle hélicoïdal de la cannelure gauche (8) est $\gamma_1 = 66{,}7°$, une longueur correspondante de la région de bord de coupe périphérique est L5 = 0,5 mm ; lorsque l'angle hélicoïdal de la cannelure gauche (8) est $\gamma_2 = 67{,}5°$, une longueur correspondante de la région de bord de coupe périphérique est L6 = 0,4 mm ; et lorsque l'angle hélicoïdal de la cannelure gauche (8) est $\gamma_3 = 75{,}7°$, une longueur correspondante de la région de bord de coupe périphérique est L7 = 0,5 mm ;
une fraise en bout stéréographique tridimensionnelle est sectionnée le long d'une direction axiale puis est dépliée ; la région de bord de coupe périphérique (III) avec une rainure hélicoïdale inversée constante qui représente le mode de configuration est sélectionnée pour former un diagramme schématique bidimensionnel de la configuration de micro-dents de la fraise en bout à l'aide d'une direction tangentielle et d'une direction axiale pour former un système de coordonnées ; les cannelures droites (7) et les cannelures gauches (8) sont disposées en quinconce pour former des micro-dents (6) ; les micro-dents (6) comprennent un bord de coupe inférieur (9) et un bord de coupe supérieur (10) ; dans le processus de conception de la fraise en bout, des paramètres géométriques d'outil sont connus, par exemple la longueur A de la micro-dent (6), la largeur B de la cannelure gauche (8), l'angle hélicoïdal θ de la cannelure droite (7), le nombre de lame de fraisage $Z_1$ et le diamètre de fraise en bout D ; le mode de configuration des micro-dents (6) est principalement déterminé par les variables suivantes : la longueur tangentielle d de la cannelure gauche (8), la longueur tangentielle c entre des micro-dents (6) adjacentes, l'angle hélicoïdal $\beta$ de la cannelure gauche (8), la longueur tangentielle f d'une micro-dent (6), et le nombre $Z_2$ de la cannelure gauche (8) ; les étapes spécifiques du procédé de conception sont les suivantes :

étape 1 : calcul de la longueur tangentielle c entre des micro-dents (6) adjacentes grâce au diamètre de fraise en bout D et le nombre $Z_1$ de lame de fraisage ;

$$c = \frac{n \times D}{Z_1} \qquad\qquad (1)$$

étape 2 : sélection de la longueur tangentielle d de la cannelure gauche (8) en tant que paramètre de variable indépendant ; établissement d'un triangle à l'aide de la largeur B de la cannelure gauche (8) et de la longueur tangentielle d de la cannelure gauche (8) en tant que côtés ; et calcul de l'angle hélicoïdal $\beta$ de la cannelure gauche (8) grâce à la relation géométrique du triangle ;

$$\frac{\sin(\theta + \beta)}{d} = \frac{\cos\beta}{B} \qquad\qquad (2)$$

de la même façon, établissement d'un triangle à l'aide de la longueur A de la micro-dent (6) et de la longueur tangentielle f de la micro-dent (6) en tant que longueurs de côté ; et calcul de la longueur tangentielle f de la micro-dent et du nombre $Z_2$ de la cannelure gauche grâce à la relation géométrique du triangle ;

$$\frac{\sin(\theta + \beta)}{f} = \frac{\cos\beta}{A} \qquad\qquad (3)$$

$$f = (n \times D \div Z_2) - d \qquad\qquad (4)$$

étape 3 : évaluation du fait de savoir si la relation d < c < f est satisfaite ; si tel est le cas, recouvrement du bord de coupe inférieur (9) et du bord de coupe supérieur (10) de chaque micro-dent (6) par le bord de coupe d'une micro-dent (6) précédente de sorte que deux bords de chaque micro-dent (6) se chevauchent ; sinon, retour à l'étape 2 pour resélectionner la longueur tangentielle d de la cannelure inversée.

Fig. 1(Fig.1 as an illustration in Abstract)

Fig. 2

Fig. 3

Region
with
variatio
n
helical
angle

$\gamma_1$

$\gamma_2$

$\gamma_3$

L5

L6

L7

Fig. 4

Calculating the tangential length c between adjacent micro-teeth through the milling cutter diameter D and the number $Z_1$ of milling blade

↓

Selecting tangential length d of inverse flute as an independent variable and calculating the helical angle β of the left-hand flute through the geometrical relationship

↓

Calculating the tangential length f of the micro-tooth and the number $Z_2$ of left-hand flute

↓

Judging whether the relationship d<c<f is satisfied and determining the configuration mode that two edges are configured to be overlapped

No

Yes

↓

Determining geometric structure parameters and outputting a model based on three-dimensional software solidworks

Fig. 5

Fig. 6

Fig. 7(a)

Fig. 7(b)

Fig. 8(a)

Fig. 8(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200910013142 A, Tang Chensheng
- WO 201610806761 A, Wang Fuji
- WO 2016098092 A1